# EUROPÄISCHE PATENTSCHRIFT

(11) **EP 3 016 828 B1**
(45) Veröffentlichungstag und Bekanntmachung des Hinweises auf die Patenterteilung: **13.03.2019**
(21) Anmeldenummer: 14728842.7
(22) Anmeldetag: 07.06.2014
(51) Int. Cl.: B60W 30/18

(54) **VERFAHREN ZUM BETREIBEN EINES KRAFTWAGENS BEI EINEM SPURWECHSEL UND KRAFTWAGEN**
METHOD FOR OPERATING A MOTOR VEHICLE WHEN CHANGING LANES, AND MOTOR VEHICLE
PROCÉDÉ POUR LE FONCTIONNEMENT D'UN VÉHICULE AUTOMOBILE LORS D'UN CHANGEMENT DE VOIE ET VÉHICULE AUTOMOBILE

(30) Priorität: 01.07.2013 DE 102013010983
(43) Veröffentlichungstag der Anmeldung: 11.05.2016
(73) Patentinhaber: Audi AG, 85045 Ingolstadt (DE)
(72) Erfinder: KÜHNE, Marcus, 92339 Beilngries (DE)
(74) Vertreter: Herbst, Matthias Heinz
(86) Internationale Anmeldenummer: PCT/EP2014/001563
(87) Internationale Veröffentlichungsnummer: WO 2015/000547

(56) Entgegenhaltungen:
- EP-A2- 2 028 072
- DE-A1-102010 003 099
- DE-A1-102011 018 159

## Beschreibung

Die Erfindung betrifft ein Verfahren zum Betreiben eines Kraftwagens bei einem Spurwechsel auf einer zumindest drei Fahrspuren umfassenden Richtungsfahrbahn sowie einen Kraftwagen mit einem Überwachungssystem.

Besonders bei Richtungsfahrbahnen, welche drei oder mehr Fahrspuren aufweisen, besteht bei Spurwechseln von unterschiedlichen Fahrzeugen eine erhöhte Unfallgefahr. Unter einer Richtungsfahrbahn ist dabei eine Fahrbahn zu verstehen, bei welcher sämtliche Fahrspuren der Richtungsfahrbahn in derselben Richtung befahren werden. Eine besonders gefährliche Fahrsituation ist beispielsweise bei einem gemeinsamen Wechsel von zwei unterschiedlichen Fahrzeugen auf eine mittlere Fahrspur gegeben. Wenn beispielsweise ein Fahrzeug von einer linken Außenspur und zeitgleich ein Fahrzeug von einer rechten Außenspur einen Spurwechsel auf eine mittlere Fahrspur anstreben, kann es zu gefährlichen Fahrsituationen in Form von Beinahekollisionen oder gar tatsächlichen Kollisionen kommen.

Die DE 10 2005 036 714 A1 zeigt ein Verfahren zur Unterstützung eines Fahrers eines Fahrzeugs bei einem Spurwechsel. Der Spurwechsel eines Fahrzeugs wird überwacht, wobei bei einer erkannten Gefahrensituation eine automatische Rückführung des Fahrzeugs auf die ursprüngliche Fahrspur erfolgt, sofern erkannt worden ist, dass die ursprüngliche Fahrspur noch frei ist.

Die DE 10 2006 010 275 A1 zeigt ein Verfahren zum Vermeiden einer Fahrzeugkollision beim Spurwechsel. Sobald bei einem Spurwechsel von einer ersten auf eine zweite Fahrspur ein weiteres Fahrzeug auf der zweiten Fahrspur erfasst wird, erfolgt die Ausgabe einer Warnmeldung oder die Einleitung einer Rückführung des Fahrzeugs in die erste, also ursprüngliche, Fahrspur.

Die DE 100 127 37 A1 zeigt eine Vorrichtung zur Durchführung eines Fahrspurwechsels durch ein Kraftfahrzeug. Falls während eines Fahrspurwechsels Hindernisse in der Zielspur erfasst werden, wird der Spurwechsel automatisch abgebrochen, wobei danach eine automatische Rückführung in die ursprüngliche Fahrspur erfolgt.

Die DE 10 2005 059 598 A1 zeigt ein System zur Kollisionsvermeidung von versetzt hintereinander fahrenden Fahrzeugen. Ein rückwärtiger und seitlicher Raum eines ersten Fahrzeugs wird überwacht, wobei automatisch in die Lenkung des ersten Fahrzeugs eingegriffen wird, wenn im rückwärtigen und/oder seitlichen Raum ein seitlich zu dem Fahrzeug versetzt fahrendes, weiteres Fahrzeug erfasst worden ist, und gleichzeitig erkannt worden ist, dass der Fahrer des ersten Fahrzeugs einen Spurwechsel vornehmen möchte.

Die DE 10 2010 054 221 A1 zeigt ein Fahrerassistenzsystem für einen Fahrzeugspurwechsel. Falls während eines Spurwechsels eine drohende Kollision ermittelt wird, wird ein Warnhinweis ausgegeben.

Die DE 10 2011 018159 A1 offenbart ein Verfahren mit den Merkmalen des Oberbegriffs des Anspruchs 1.

Es ist die Aufgabe der vorliegenden Erfindung, die Unfallgefahr bei einem Spurwechsel mit einem Kraftwagen auf einer zumindest drei Fahrspuren umfassenden Richtungsfahrbahn zu verringern.

Diese Aufgabe wird durch ein Verfahren zum Betreiben eines Kraftwagens sowie durch einen Kraftwagen mit den Merkmalen der unabhängigen Patentansprüche gelöst. Vorteilhafte Ausgestaltungen mit zweckmäßigen und nicht-trivialen Weiterbildungen der Erfindung sind in den abhängigen Ansprüchen angegeben.

Das erfindungsgemäße Verfahren zum Betreiben eines Kraftwagens bei einem Spurwechsel auf einer zumindest drei Fahrspuren umfassenden Richtungsfahrbahn umfasst die folgenden Schritte:
Erfassen eines bevorstehenden Spurwechsels des Kraftwagens von einer ersten Fahrspur auf eine benachbarte zweite Fahrspur mittels eines Überwachungssystems des Kraftwagens;
- Erfassen eines bevorstehenden Spurwechsels eines anderen Fahrzeugs von einer benachbart zur zweiten Fahrspur verlaufenden dritten Fahrspur auf die zweite Fahrspur;
- Ermitteln mittels des Überwachungssystems, ob bei einer Durchführung des Spurwechsels mit dem Kraftwagen eine Kollision mit dem anderen Fahrzeug droht;
- Ausgeben eines Warnsignals mittels einer Warneinrichtung und/oder Beeinflussen der Querführung des Kraftwagens mittels eines Fahrerassistenzsystems des Kraftwagens, sobald eine drohende Kollision ermittelt worden ist.

Es ist also erfindungsgemäß vorgesehen, sobald bei einem Kraftwagen ein Bevorstehen des Spurwechsels erfasst worden ist, einen Bereich auf einer übernächsten Fahrspur zu überwachen und zu ermitteln, ob sich dort ein Fahrzeug befindet beziehungsweise fährt, bei welchem ebenfalls mit einem Spurwechsel auf die zwischen den beiden Kraftwagen verlaufende Fahrspur zu rechnen ist. Sobald erfasst wird, dass beide Fahrzeuge einen Spurwechsel auf eine gemeinsame, insbesondere mittlere Fahrspur unternehmen wollen, wird ein Warnsignal ausgegeben und/oder wird die Querführung des Kraftwagens zur Kollisionsvermeidung entsprechend angesteuert. Dadurch können besonders gefährliche Fahrsituationen beim Befahren von Richtungsfahrbahnen mit drei oder mehr Fahrspuren, welche alle in dieselbe Richtung befahren werden, erheblich reduziert werden. Durch die frühzeitige Erfassung einer zumindest im Wesentlichen gleichzeitigen Spurwechselabsicht des Kraftwagens und des anderen Fahrzeugs kann die Gefahr von Beinahekollisionen oder tatsächlichen Kollisionen zwischen dem Kraftwagen und dem anderen Fahrzeug erheblich reduziert oder gar vollständig vermieden werden.

In vorteilhafter Ausgestaltung der Erfindung ist es vorgesehen, dass das Bevorstehen des Spurwechsels des Kraftwagens anhand einer entsprechenden Blinkerbetätigung und/oder anhand einer entsprechenden Lenkbewegung des Kraftwagens ermittelt wird. Es muss also nicht erst erfasst werden, dass der Kraftwagen beispielsweise eine Fahrbahnmarkierung überquert hat. Stattdessen wird anhand einer erfassten Blinkerbetätigung oder anhand einer entsprechenden Lenkbewegung des Kraftwagens sehr vorausschauend und somit frühzeitig eine bevorstehende Spurwechselabsicht ermittelt.

In weiterer vorteilhafter Ausgestaltung der Erfindung ist es vorgesehen, dass das Bevorstehen des Spurwechsels des anderen Fahrzeugs anhand einer entsprechenden Blinkerbetätigung und/oder anhand einer entsprechenden Bewegung es Kraftwagens in Querrichtung der Richtungsfahrbahn ermittelt wird. Dadurch kann ein eventuell bevorstehender Spurwechsel des anderen Fahrzeugs ebenfalls besonders frühzeitig erfasst werden, beispielsweise noch bevor das andere Fahrzeug eine Fahrbahnmarkierung überquert hat.

In weiterer vorteilhafter Ausgestaltung der Erfindung ist es vorgesehen, dass das Warnsignal bereits ausgegeben wird, sobald das Bevorstehen des jeweiligen Spurwechsels des Kraftwagens und des anderen Fahrzeugs erfasst worden ist. Somit wird ein Fahrer des Kraftwagens auf eine eventuelle Gefahrensituation schon besonders frühzeitig hingewiesen.

Gemäß der Erfindung ist vorgesehen, dass mittels des Überwachungssystems ein die zweite und die dritte Fahrspur bereichsweise umfassender erster Überwachungsbereich überwacht wird. Vorzugsweise umfasst der Überwachungsbereich sowohl einen in Längsrichtung der Richtungsfahrbahn vor dem Kraftwagen als auch in Längsrichtung der Richtungsfahrbahn hinter dem Kraftwagen liegenden Bereich, welcher in Querrichtung der Fahrbahn die zweite und die dritte Fahrbahn abdeckt. Dadurch können entsprechende Fahrzeuge auf der dritten Fahrspur frühzeitig und sicher detektiert werden, so dass anhand dieser Überwachungsinformation frühzeitig erfasst werden kann, ob eine eventuelle Spurwechselabsicht eines Fahrzeugs besteht, welches von der dritten Fahrspur auf die zweite Fahrspur wechseln möchte.

Gemäß einer weiteren vorteilhaften Ausführungsform der Erfindung ist es vorgesehen, dass, solange sich das andere Fahrzeug in dem ersten Überwachungsbereich befindet, die Bewegung des Fahrzeugs erfasst und anhand dessen das Bevorstehen des Spurwechsels des Fahrzeugs ermittelt wird. Dadurch kann frühzeitig eine entsprechende Spurwechselabsicht des anderen Fahrzeugs erfasst werden, so dass der Fahrer des Kraftwagens frühzeitig gewarnt werden kann beziehungsweise das Fahrerassistenzsystem des Kraftwagens die Querführung des Kraftwagens entsprechend frühzeitig beeinflussen kann, um eine eventuell drohende Kollision mit dem anderen Fahrzeug automatisch, also ohne einen Eingriff des Fahrers, zu verhindern.

In weiterer vorteilhafter Ausgestaltung der Erfindung ist es vorgesehen, dass, solange sich das Fahrzeug in dem ersten Überwachungsbereich befindet, die Relativbewegung des Fahrzeugs gegenüber dem Kraftwagen erfasst und anhand dessen ermittelt wird, ob eine Kollision des Kraftwagens mit dem anderen Fahrzeug bei der Durchführung des Spurwechsels mit dem Kraftwagen droht. Dadurch kann auf besonders zuverlässige Weise die Wahrscheinlichkeit einer eventuellen Kollision zwischen dem Kraftwagen und dem anderen Fahrzeug ermittelt werden. Bei der Ermittlung der Kollisionswahrscheinlichkeit können beispielsweise jeweilige Bewegungstrajektorien anhand der aktuell erfassten Relativbewegung extrapoliert werden, um zu ermitteln, ob bei einer Durchführung der jeweiligen Spurwechsel eine Kollisionsgefahr besteht.

Eine weitere vorteilhafte Ausführungsform der Erfindung sieht vor, dass eine Durchführung des bevorstehenden Spurwechsels erschwert oder verhindert wird, sobald eine drohende Kollision mit dem anderen Fahrzeug ermittelt worden ist. Beispielsweise kann die Durchführung des bevorstehenden Spurwechsels des Kraftwagens dadurch erschwert werden, dass zur Betätigung der Lenkung des Kraftwagens ein erhöhtes Moment aufgebracht werden muss. Mit anderen Worten kann der Lenkwiderstand erhöht werden, zumindest in die mit dem geplanten Spurwechsel korrespondierende Richtung. Alternativ ist es auch möglich, dass durch das Fahrerassistenzsystem ein automatischer Eingriff in die Lenkung des Kraftwagens vorgenommen wird, so dass ein Spurwechsel von der ersten Fahrspur auf die zweite Fahrspur mit dem Kraftwagen verhindert wird. Insbesondere kann bei einer drohenden Kollisionsgefahr dadurch ein Überreißen des Lenkrads durch einen Fahrer des Kraftwagens verhindert werden, falls dieser beispielsweise in Panik geraten sollte.

Gemäß der Erfindung ist es vorgesehen, dass der Kraftwagen mittels des Fahrerassistenzsystems automatisch wieder in die erste Fahrspur zurückbewegt wird, sobald eine drohende Kollision mit dem anderen Fahrzeug ermittelt und die erste Fahrspur mit dem Kraftwagen bereits zumindest teilweise verlassen worden ist. Mit anderen Worten erfolgt also eine automatische Rückführung des Kraftwagens in die erste Fahrspur, so dass eine Kollision, welche bei einer Fortführung des Spurwechsels wahrscheinlich wäre, verhindert werden kann.

Eine weitere vorteilhafte Ausführungsform der Erfindung sieht vor, dass mittels des Überwachungssystems ein die erste Fahrspur bereichsweise umfassender zweiter Überwachungsbereich überwacht und der Kraftwagen nur in die erste Fahrspur zurückbewegt wird, falls sich kein weiteres Fahrzeug in dem zweiten Überwachungsbereich befindet. Somit wird also vor einer eventuellen Rückführung des Kraftwagens auf die erste Fahrspur zunächst ermittelt, ob sich nicht bereits ein anderes Fahrzeug in Längsrichtung der Richtungsfahrbahn gesehen zu nahe an dem Kraftwagen auf der ersten Spur befindet, so dass eine automatische Rückführung in die erste Fahrspur nur dann erfolgt, falls dadurch keine weiteren anderen Verkehrsteilnehmer gefährdet werden.

Gemäß der Erfindung ist es vorgesehen, dass die Größe des ersten Überwachungsbereichs, insbesondere in Längsrichtung der Richtungsfahrbahn, in Abhängigkeit von einer aktuell zulässigen Höchstgeschwindigkeit angepasst wird. In weiterer vorteilhafter Ausgestaltung der Erfindung ist es vorgesehen, dass die Größe des zweiten Überwachungsbereichs, insbesondere in Längsrichtung der Richtungsfahrbahn, in Abhängigkeit von der aktuellen Geschwindigkeit des Kraftwagens und/oder von einer aktuell zulässigen Höchstgeschwindigkeit angepasst wird. Durch die geschwindigkeitsabhängige Anpassung des Überwachungsbereichs können andere Fahrzeuge rechtzeitig erfasst werden, so dass die Abschätzung einer eventuellen Kollisionsgefahr bei einem Spurwechsel des Kraftwagens sicher abgeschätzt werden kann.

Vorteilhafte Ausgestaltungen des erfindungsgemäßen Verfahrens sind als vorteilhafte Ausgestaltungen des erfindungsgemäßen Kraftwagens anzusehen, wobei der Kraftwagen insbesondere Mittel zur Durchführung der Verfahrensschritte umfasst.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Ausführungsbeispiele der Erfindung werden nachfolgend anhand schematischer Figuren näher erläutert. Es zeigen:
- Fig. 1: eine schematische Darstellung eines Kraftwagens mit einem Überwachungssystem zur Kollisionsvermeidung bei Spurwechseln mit dem Kraftwagen;
- Fig. 2: eine schematische Darstellung einer drei Fahrspuren umfassenden Richtungsfahrbahn, wobei der in Fig. 1 schematisch dargestellte Kraftwagen im vorliegenden Fall die äußerst rechte Fahrspur befährt und ein weiterer Kraftwagen die äußerst linke Fahrspur befährt;
- Fig. 3: eine weitere schematische Darstellung der Richtungsfahrbahn, wobei beide Kraftwagen einen Spurwechsel von ihrer jeweiligen Spur auf die mittlere Spur eingeleitet haben; und
- Fig. 4: eine weitere schematische Darstellung der Richtungsfahrbahn, wobei der rechte Kraftwagen seinen Spurwechsel auf die mittlere Fahrspur abbricht und automatisch auf die äußere rechte Fahrspur zurückgeführt wird.

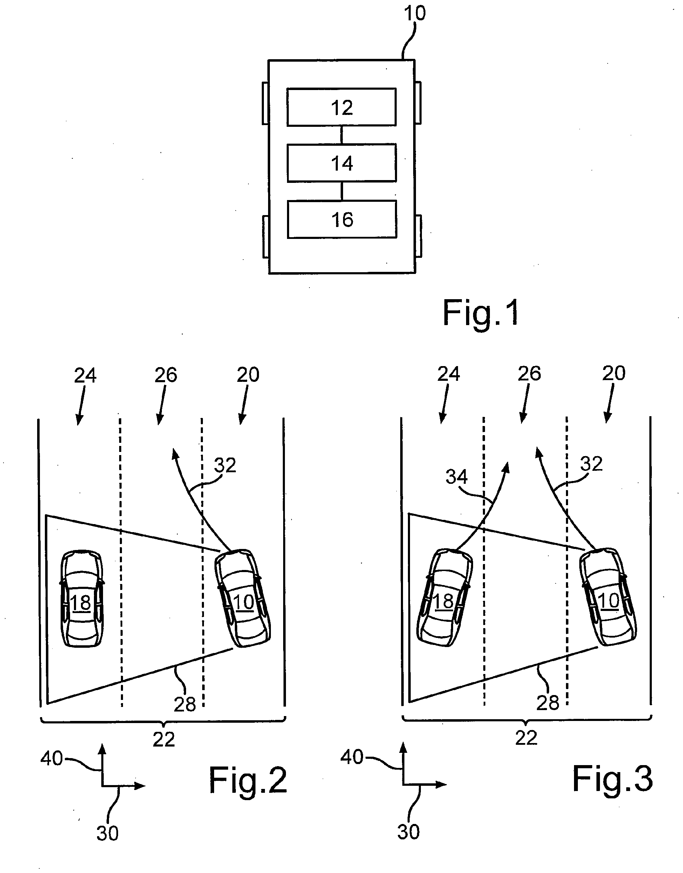

Ein Kraftwagen 10 ist in einer schematischen Darstellung in Fig. 1 gezeigt. Der Kraftwagen 10 umfasst ein Überwachungssystem 12, eine Warneinrichtung 14 sowie ein Fahrerassistenzsystem 16.

In Fig. 2 sind der Kraftwagen 10 sowie ein weiterer Kraftwagen 18 gezeigt, wobei der Kraftwagen 10 eine rechte Fahrspur 20 einer Richtungsfahrbahn 22 und der Kraftwagen 18 eine linke äußere Spur 24 der Richtungsfahrbahn 22 befährt. Eine mittlere Fahrspur 26 wird im hier gezeigten Fall nicht befahren. Bei der Richtungsfahrbahn kann es sich beispielsweise um eine Fahrbahn einer Autobahn handeln, wobei auf alle drei Fahrspuren 20, 24, 26 in dieselbe Richtung zu befahren sind. Alternativ kann es sich auch um eine mehrspurige Richtungsfahrbahn in einer Stadt oder dergleichen handeln, auf welcher die Fahrspuren 20, 24, 26 alle in derselben Richtung zu befahren sind.

Das Überwachungssystem 12 ist dazu ausgelegt, einen bevorstehenden Spurwechsel des Kraftwagens 10, also beispielsweise von der rechten Fahrspur 20 auf die mittlere Fahrspur 26 zu erfassen, zu erfassen. Des Weiteren ist das Überwachungssystem 12 dazu ausgelegt, einen bevorstehenden Spurwechsel des Kraftwagens 18, also beispielsweise von der linken Fahrspur 24 auf die rechte Fahrspur 26, zu erfassen. Darüber hinaus ist das Überwachungssystem 12 dazu ausgelegt, zu ermitteln, ob bei einer Durchführung des Spurwechsels mit dem Kraftwagen 10 eine Kollision mit dem anderen Kraftwagen 18 droht, falls dieser ebenfalls einen Spurwechsel auf dieselbe Fahrspur 26 durchführt. Das Überwachungssystem 12 kann beispielsweise ein Kamerasystem umfassen, mittels welchem ein die mittlere Fahrspur 26 und die linke Fahrspur 24 bereichsweise umfassender erster Überwachungsbereich 28 überwacht werden kann. Alternativ oder zusätzlich kann das Überwachungssystem 12 beispielsweise auch radarbasierte oder lidarbasierte Erfassungseinrichtungen aufweisen, mittels welchen der Überwachungsbereich 28 überwacht werden kann.

Die Warneinrichtung 14 kann beispielsweise bei einer drohenden Kollision das Warnsignal sowohl über ein Display des Kraftwagens 10 optisch ausgeben und/oder über Lautsprecher des Kraftwagens 10 akustisch ausgeben. Alternativ oder zusätzlich kann es auch vorgesehen sein, dass mittels der Warneinrichtung ein Lenkradrütteln hervorgerufen wird, um einen Fahrer des Kraftwagens 10 vor einer eventuell drohenden Kollision mittels eines haptisch erfassbaren Warnsignals zu warnen.

Nachfolgend wird ein Verfahren zum Betreiben des Kraftwagens 10 bei einem Spurwechsel erläutert. Zunächst wird ein Bevorstehen des Spurwechsels des Kraftwagens 10 von der rechten Fahrspur 20 auf die benachbarte mittlere Fahrspur 26 mittels des Überwachungssystems 12 erfasst. Das Bevorstehen des Spurwechsels des Kraftwagens 10 wird anhand einer entsprechenden Blinkerbetätigung und/oder anhand einer entsprechenden Lenkbewegung des Kraftwagens 10 ermittelt.

Anschließend wird ein bevorstehender Spurwechsel des anderen Kraftwagens 18 von der äußerst linken Fahrspur 24 auf die mittlere Fahrspur 26 durch das Überwachungssystem 12 erfasst. Das Bevorstehen des Spurwechsels des anderen Kraftwagens erfolgt ebenfalls anhand einer erfassten entsprechenden Blinkerbetätigung und/oder anhand einer entsprechenden Erfassung der Bewegung des Kraftwagens 18 in Querrichtung 30 der Richtungsfahrbahn 22. Sobald mittels des Überwachungssystems 12 erfasst worden ist, dass bei beiden Kraftwagen 10, 18 ein Spurwechsel bevorsteht, wird mittels der Warneinrichtung 14 bereits ein Warnsignal ausgegeben, um den Fahrer des Kraftwagens 10 zu warnen, dass der sich auf der gleichen Höhe befindende andere Kraftwagen 18 ebenfalls einen Spurwechsel einleiten will, wie dies in Fig. 3 angedeutet ist.

So lange sich der andere Kraftwagen 18 in dem ersten Überwachungsbereich 28 befindet, wird die Bewegung des Kraftwagens 18 mittels des Überwachungssystems 12 erfasst, wobei anhand dessen das Bevorstehen des Spurwechsels des Kraftwagens 18 ermittelt wird. Insbesondere wird, solange sich der Kraftwagen 18 in dem ersten Überwachungsbereich 28 befindet, die Relativbewegung des Kraftwagens 18 gegenüber dem Kraftwagen 10 erfasst und anhand dessen ermittelt, ob eine Kollision des Kraftwagens 10 bei der Durchführung des Spurwechsels von der äußerst rechten Fahrspur 20 auf die mittlere Fahrspur 26 droht. Beispielsweise kann anhand der jeweiligen Erfassung der aktuellen Bewegungen des Kraftwagens 10 und des anderen Kraftwagens 18 mittels des Überwachungssystems 12 eine jeweilige Bewegungstrajektorie 32, 34 extrapoliert werden, anhand derer eine Kollisionswahrscheinlichkeit bei der Durchführung der jeweiligen Spurwechsel der beiden Kraftwagen 10, 18 ermittelt wird. Im in der Fig. 3 gezeigten Fall wird es also bei einer gleichzeitigen Durchführung der Spurwechsel der beiden Kraftwagen 10, 18 zu einer Kollision zwischen den beiden Kraftwagen 10, 18 auf der mittleren Fahrspur 26 kommen.

Sobald mittels des Überwachungssystems erfasst worden ist, dass eine Kollision mit dem anderen Kraftwagen 18 droht, wird erneut ein Warnsignal ausgegeben, welches den Fahrer des Kraftwagens 10 vor einer unter Umständen bevorstehenden Kollision mit dem anderen Kraftwagen 18 warnt. Sollte der Fahrer des Kraftwagens 10 seinen Spurwechsel weiterhin vornehmen wollen und den Kraftwagen 10 entsprechend steuern, wird in einem ersten Schritt durch das Fahrerassistenzsystem 16 die Durchführung des bevorstehenden Spurwechsels erschwert, indem ein aufzubringendes Lenkmoment am Lenkrad des Kraftwagens 10 erhöht wird, wodurch ein stärkeres Einlenken des Kraftwagens 10, im vorliegenden Fall nach links, erschwert wird. Sollte dies nicht zum gewünschten Erfolg führen, wird mittels des Fahrerassistenzsystems 16 die Durchführung des geplanten Spurwechsels verhindert, so lange weiterhin eine drohende Kollision mit dem anderen Kraftwagen 18 ermittelt wird.

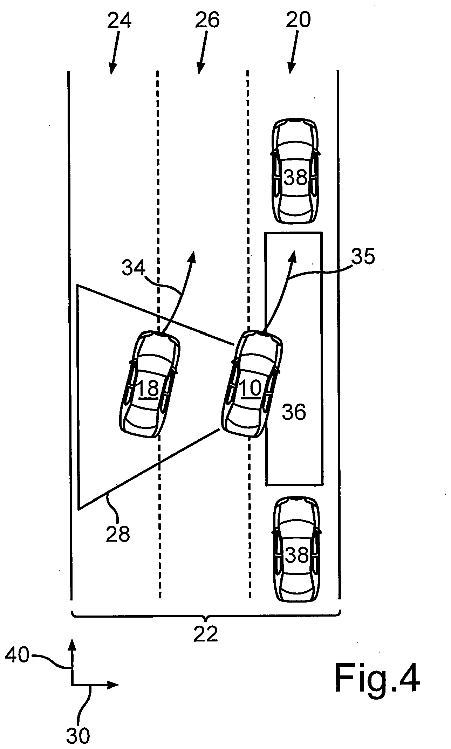

In Fig. 4 ist in einer weiteren schematischen Darstellung erneut die Richtungsfahrbahn 22 dargestellt, wobei im dort gezeigten Fall eine automatische Rückführung des Kraftwagens 10 gemäß der mit dem Pfeil 35 angedeuteten Trajektorie in die ursprünglich befahrene Fahrspur 20 erfolgt. Der Kraftwagen 10 wird mittels des Fahrerassistenzsystems 16 automatisch wieder in die äußerst rechte Fahrspur 20 zurückbewegt, da weiterhin eine drohende Kollision mit dem anderen Kraftwagen 18 ermittelt wird und die äußerst rechte Fahrspur 20 bereits mit dem Kraftwagen 10 zumindest teilweise verlassen worden ist. Bevor jedoch eine automatische Rückführung des Kraftwagens 10 in die rechte Fahrspur 20 erfolgt, wird mittels des Überwachungssystems 12 ein die rechte Fahrspur 20 teilweise umfassender zweiter Überwachungsbereich 36 überwacht. Der Kraftwagen 10 wird nur in die erste Fahrspur 20 zurückbewegt, falls sich kein weiteres Fahrzeug 38 in dem Überwachungsbereich 36 befindet.

Im vorliegend dargestellten Fall bewegen sich die Kraftwagen 38 außerhalb des zweiten Überwachungsbereichs 36, so dass der Kraftwagen 10 mittels des Fahrerassistenzsystems 16 automatisch und gefahrlos in die rechte Fahrspur 20 zurückbewegt werden kann, um eine Kollision mit dem anderen Kraftwagen 18 zu vermeiden, welcher ungeachtet der gefährlichen Situation den Spurwechsel von der linken Fahrspur 24 auf die mittlere Fahrspur 26 fortsetzt. Alternativ kann der Überwachungsbereich 36 in Längsrichtung 40 der Richtungsfahrbahn 22 auch größer gewählt werden, so dass entsprechende Relativbewegungen zwischen dem Kraftwagen 10 und den die rechte Fahrspur 20 befahrenden Kraftwagen 38 erfasst werden können. In Abhängigkeit davon, ob der Kraftwagen 10 sich beispielsweise mit zu hoher Geschwindigkeit dem vorderen Kraftwagen 38 nähert oder ob sich der hintere Kraftwagen 38 zu schnell in Längsrichtung der Richtungsfahrbahn 22 dem Kraftwagen 10 nähert, kann beispielsweise auch eine automatische Rückführung des Kraftwagens 10 von der mittleren Fahrspur 26 auf die rechte Fahrspur 20 unterbunden werden.

Um drohende Kollisionen mit anderen Kraftwagen 18, 38 bei entsprechenden Spurwechseln zu verhindern, wird die jeweilige Größe des ersten Überwachungsbereichs 28 und des zweiten Überwachungsbereichs 36 in Längsrichtung 40 der Richtungsfahrbahn 22 in Abhängigkeit von der aktuellen Geschwindigkeit des Kraftwagens 10 und/oder in Abhängigkeit von einer gerade aktuell zulässigen Höchstgeschwindigkeit auf dem gerade befahrenen Abschnitt der Richtungsfahrbahn 22 angepasst.

Je höher also gerade die Geschwindigkeit ist, mit welcher der Kraftwagen 10 fortbewegt wird oder auch je höher die aktuell zulässige Höchstgeschwindigkeit auf dem Fahrbahnabschnitt gerade ist, desto größer werden die jeweiligen Überwachungsbereiche 28, 36 in Längsrichtung der Richtungsfahrbahn eingestellt. Umgekehrt wird die Erstreckung beziehungsweise die Größe der Überwachungsbereiche 28, 36 in Längsrichtung der Richtungsfahrbahn 40 kleiner gewählt, je geringer die aktuelle Geschwindigkeit des Kraftwagens 10 oder die aktuelle Geschwindigkeitsbegrenzung auf dem befahrenen Fahrbahnabschnitt sein sollte. Dadurch wird eine situationsangepasste und dennoch zuverlässige Vermeidung von Kollisionen bei Spurwechselvorgängen begünstigt.

## Patentansprüche

1. Verfahren zum Betreiben eines Kraftwagens bei einem Spurwechsel auf einer zumindest drei Fahrspuren (20, 24, 26) umfassenden Richtungsfahrbahn (22), mit den Schritten:
- Erfassen eines bevorstehenden Spurwechsels des Kraftwagens (10) von einer ersten Fahrspur (20) auf eine benachbarte zweite Fahrspur (26) mittels eines Überwachungssystems (12) des Kraftwagens (10);
- Erfassen eines bevorstehenden Spurwechsels eines anderen Fahrzeugs (18) von einer benachbart zur zweiten Fahrspur (26) verlaufenden dritten Fahrspur (24) auf die zweite Fahrspur (26), wobei mittels des Überwachungssystems (12) ein die zweite und die dritte Fahrspur (24) bereichsweise umfassender erster Überwachungsbereich (28) überwacht wird;
- Ermitteln mittels des Überwachungssystems (12), ob bei einer Durchführung des Spurwechsels mit dem Kraftwagen (10) eine Kollision mit dem anderen Fahrzeug (18) droht;
- Ausgeben eines Warnsignals mittels einer Warneinrichtung (14) und/oder Beeinflussen der Querführung des Kraftwagens (10) mittels eines Fahrerassistenzsystems (16) des Kraftwagens (10), sobald eine drohende Kollision ermittelt worden ist;
**dadurch gekennzeichnet, dass**
- der Kraftwagen (10) mittels des Fahrerassistenzsystems automatisch wieder in die erste Fahrspur (20) zurückbewegt wird, sobald eine drohende Kollision mit dem anderen Fahrzeug (18) ermittelt und die erste Fahrspur (20) mit dem Kraftwagen (10) bereits zumindest teilweise verlassen worden ist;
- die Größe des ersten Überwachsungsbereichs (28), insbesondere in Längsrichtung (40) der Richtungsfahrbahn (22), in Abhängigkeit von einer aktuell zulässigen Höchstgeschwindigkeit angepasst wird.

2. Verfahren nach Anspruch 1,
**dadurch gekennzeichnet, dass**
das Bevorstehen des Spurwechsels des Kraftwagens (10) anhand einer entsprechenden Blinkerbetätigung und/oder anhand einer entsprechenden Lenkbewegung des Kraftwagens (10) ermittelt wird.

3. Verfahren nach Anspruch 1 oder 2,
**dadurch gekennzeichnet, dass**
das Bevorstehen des Spurwechsels des anderen Fahrzeugs (18) anhand einer entsprechenden Blinkerbetätigung und/oder anhand einer entsprechenden Bewegung des anderen Fahrzeugs (18) in Querrichtung (30) der Richtungsfahrbahn (22) ermittelt wird.

4. Verfahren nach einem der vorhergehenden Ansprüche,
**dadurch gekennzeichnet, dass**
das Warnsignal bereits ausgegeben wird, sobald das Bevorstehen der jeweiligen Spurwechsel des Kraftwagens (10) und des anderen Fahrzeugs (18) erfasst worden ist.

5. Verfahren nach einem der vorhergehenden Ansprüche,
**dadurch gekennzeichnet, dass**
solange sich das andere Fahrzeug (18) in dem ersten Überwachungsbereich (18) befindet, die Bewegung des Fahrzeugs (18) erfasst und anhand dessen das Bevorstehen des Spurwechsels des Fahrzeugs (18) ermittelt wird.

6. Verfahren nach einem der vorhergehenden Ansprüche,
**dadurch gekennzeichnet, dass**
solange sich das Fahrzeug (18) in dem ersten Überwachungsbereich (28) befindet, die Relativbewegung des Fahrzeugs (18) gegenüber dem Kraftwagen (10) erfasst und anhand dessen ermittelt wird, ob eine Kollision des Kraftwagens (10) mit dem anderen Fahrzeug (18) bei der Durchführung des Spurwechsels mit dem Kraftwagen (10) droht.

7. Verfahren nach einem der vorhergehenden Ansprüche,
**dadurch gekennzeichnet, dass**
eine Durchführung des bevorstehenden Spurwechsels erschwert oder verhindert wird, sobald eine drohende Kollision mit dem anderen Fahrzeug (18) ermittelt worden ist.

8. Verfahren nach einem der vorhergehenden Ansprüche,
**dadurch gekennzeichnet, dass**
mittels des Überwachungssystems (12) ein die erste Fahrspur (20) bereichsweise umfassender zweiter Überwachungsbereich (36) überwacht und der Kraftwagen (10) nur in die erste Fahrspur (20) zurückbewegt wird, falls sich kein weiteres Fahrzeug (38) in dem zweiten Überwachungsbereich (36) befindet.

9. Verfahren nach Anspruch 8
**dadurch gekennzeichnet, dass**
die Größe des zweiten Überwachsungsbereichs (36), insbesondere in Längsrichtung (40) der Richtungsfahrbahn (22), in Abhängigkeit von der aktuellen Geschwindigkeit des Kraftwagens (10) und/oder von einer aktuell zulässigen Höchstgeschwindigkeit angepasst wird.

10. Verfahren nach einem der vorhergehenden Ansprüche,
**dadurch gekennzeichnet, dass**
die Größe des ersten Überwachsungsbereichs (28), insbesondere in Längsrichtung (40) der Richtungsfahrbahn (22), in Abhängigkeit von der aktuellen Geschwindigkeit des Kraftwagens (10) angepasst wird.

11. Kraftwagen (10) mit:
- einem Überwachungssystem (12), welches dazu ausgelegt ist,
▪ einen bevorstehenden Spurwechsel des Kraftwagens (10) von einer ersten Fahrspur (20) auf eine benachbarte zweite Fahrspur (26) zu erfassen;
▪ einen bevorstehenden Spurwechsel eines anderes Fahrzeugs (18) von einer benachbart zur zweiten Fahrspur (26) verlaufenden dritten Fahrspur (24) auf die zweite Fahrspur (26) zu erfassen;
▪ einen die zweite und die dritte Fahrspur (24) bereichsweise umfassenden ersten Überwachungsbereich (28) zu überwachen;
▪ zu ermitteln, ob bei einer Durchführung des Spurwechsels mit dem Kraftwagen (10) eine Kollision mit dem anderen Fahrzeug (18) droht;
- einer Warneinrichtung (14), welche dazu ausgelegt ist, ein Warnsignal auszugeben, sobald eine drohende Kollision mit dem anderen Fahrzeug (18) ermittelt worden ist
- einem Fahrerassistenzsystem (16), welches dazu ausgelegt ist, die Querführung des Kraftwagens (10) zu beeinflussen, sobald eine drohende Kollision mit dem anderen Fahrzeug (18) ermittelt worden ist;
**dadurch gekennzeichnet, dass**
- das Fahrerassistenzsystem (16) dazu ausgelegt ist, den Kraftwagen (10) automatisch wieder in die erste Fahrspur (20) zurück zu bewegen, sobald eine drohende Kollision mit dem anderen Fahrzeug (18) ermittelt und die erste Fahrspur (20) mit dem Kraftwagen (10) bereits zumindest teilweise verlassen worden ist;
- das Überwachungssystem (12) dazu ausgelegt ist, die Größe des ersten Überwachsungsbereichs (28), insbesondere in Längsrichtung (40) der Richtungsfahrbahn (22), in Abhängigkeit von einer aktuell zulässigen Höchstgeschwindigkeit anzupassen.

## Claims

1. Method for operating a motor vehicle when changing lanes on a carriageway (22) comprising at least three driving lanes (20, 24, 26), having the steps:
- detecting an impending change of lane of the motor vehicle (10) from a first driving lane (20) to an adjacent second driving lane (26) by means of a monitoring system (12) of the motor vehicle (10);
- detecting an impending change of lane of another vehicle (18) from a third driving lane (24), extending adjacent to the second driving lane (26), to the second driving lane (26), wherein by means of the monitoring system (12) a first monitoring area (28) is monitored including in portions the second and the third driving lane (24);
- determining by means of the monitoring system (12) whether, at the carrying-out of the change of lane with the motor vehicle (10) a collision with the other vehicle (18) threatens;
- outputting of a warning signal by means of a warning device (14) and/or influencing of the lateral guidance of the motor vehicle (10) by means of a driver assistance system (16) of the motor vehicle (10) as soon as a threatening collision has been detected;
**characterised in that**
- the motor vehicle (10) by means of the driver assistance system is automatically moved back into the first driving lane (20) as soon as a threatening collision with the other vehicle (18) is been determined and the first driving lane (20) has been already at least partially vacated with the motor vehicle (10);
- the size of the first monitoring area (28), in particular in longitudinal direction (40) of the carriageway (22) is customised depending on a currently permitted maximum speed.

2. Method according to claim 1,
**characterised in that**
the impending change of lane of the motor vehicle (10) is determined with the aid of an appropriate operation of the indicator and/or with the aid of an appropriate steering movement of the motor vehicle (10).

3. Method according to claim 1 or 2,
**characterised in that**
the impending change of lane of the other vehicle (18) is determined with the aid of an appropriate operation of the indicator and/or with the aid of an appropriate movement of the other vehicle (18) in lateral direction (30) of the carriageway (22).

4. Method according to any of the preceding claims,
**characterised in that**
the warning signal is already outputted as soon as the intention of the respective change of lane of the motor vehicle (10) and the other vehicle (18) has been detected.

5. Method according to any of the preceding claims,
**characterised in that**
as long as the other vehicle (18) is located in the first monitoring region (18), the movement of the vehicle (18) is detected and on the basis thereof the impending change of lane of the vehicle (18) is determined.

6. Method according to any of the preceding claims,
**characterised in that**
as long as the other vehicle (18) is located in the first monitoring region (28), the relative movement of the vehicle (18) with respect to the motor vehicle (10) is detected and on the basis thereof it is determined whether a collision of the motor vehicle (10) with the other vehicle (18) threatens in the case of the carrying-out of the change of lane with the motor vehicle (10).

7. Method according to any of the preceding claims,
**characterised in that**
a carrying-out of the impending change of lane is impeded or prevented as soon as a threatening collision with the other vehicle (18) has been determined.

8. Method according to any of the preceding claims,
**characterised in that**
by means of the monitoring system (12) a second monitoring area (36) including in portions the first driving lane (20) is monitored and the motor vehicle (10) is moved back into the first driving lane (20) only in the case that no further vehicle (38) is located in the second monitoring area (36).

9. Method according to claim 8,
**characterised in that**
the size of the second monitoring area (36), in particular in longitudinal direction (40) of the carriageway (22), is customised depending on the current speed of the motor vehicle (10) and/or on a currently permitted maximum speed.

10. Method according to any of the preceding claims,
**characterised in that**
the size of the first monitoring area (28), in particular in longitudinal direction (40) of the carriageway (22), is customised depending on the current speed of the motor vehicle (10).

11. Motor vehicle (10) having:
- a monitoring system (12) which is configured
- to detect an impending change of lane of the motor vehicle (10) from a first driving lane (20) to an adjacent second driving lane (26);
- to detect an impending change of lane of another vehicle (18) from a third driving lane (24), extending adjacent to the second driving lane (26), to the second driving lane (26);
- to monitor a first monitoring area (28) including in portions the second and the third driving lane (24);
- to determine whether in the case of a carrying-out of the change of lane with the motor vehicle (10) a collision with the other vehicle (18) threatens;
- a warning device (14) which is configured to output a warning signal as soon as a threatening collision with the other vehicle (18) has been determined
- a driver assistance system (16) which is configured to influence the lateral guiding of the motor vehicle (10) as soon as a threatening collision with the other vehicle (18) has been determined;
**characterised in that**
- the driver assistance system (16) is designed to move the motor vehicle (10) automatically back into the first driving lane (20) as soon as a threatening collision with the other vehicle (18) has been determined and the first driving lane (20) has been at least partially vacated with the motor vehicle (10);
- the monitoring system (12) is designed to customise the size of the first monitoring area (28), in particular in longitudinal direction (40) of the carriageway (22), depending on a currently permitted maximum speed.

## Revendications

1. Procédé pour le fonctionnement d'un véhicule automobile lors d'un changement de voie sur une chaussée directionnelle (22) comprenant au moins trois voies de circulation (20, 24, 26), avec les étapes de :
- détection d'un changement de voie imminent du véhicule automobile (10) d'une première voie de circulation (20) à une deuxième voie de circulation (26) adjacente au moyen d'un système de surveillance (12) du véhicule automobile (10) ;
- détection d'un changement de voie imminent d'un autre véhicule (18) d'une troisième voie de circulation (24) s'étendant de manière adjacente à la deuxième voie de circulation (26) à la deuxième voie de circulation (26), dans lequel une première zone de surveillance (28) comprenant par endroits la deuxième et la troisième voie de circulation (24) est surveillée au moyen du système de surveillance (12) ;
- le fait de déterminer, au moyen du système de surveillance (12), s'il y a un risque de collision avec l'autre véhicule (18) lors d'une réalisation du changement de voie avec le véhicule automobile (10) ;
- émission d'un signal d'avertissement au moyen d'un dispositif d'avertissement (14) et/ou influence du guidage transversal du véhicule automobile (10) au moyen d'un système d'assistance au conducteur (16) du véhicule automobile (10), dès qu'un risque de collision a été déterminé ;
**caractérisé en ce que**
- le véhicule automobile (10) est ramené automatiquement dans la première voie de circulation (20) au moyen du système d'assistance au conducteur, dès qu'un risque de collision avec l'autre véhicule (18) a été déterminé et que la première voie de circulation (20) avec le véhicule automobile (10) a déjà été quittée au moins en partie ;
- la taille de la première zone de surveillance (28), en particulier dans la direction longitudinale (40) de la chaussée directionnelle (22), est adaptée en fonction d'une vitesse maximum actuellement autorisée.

2. Procédé selon la revendication 1,
**caractérisé en ce que**
l'imminence du changement de voie du véhicule automobile (10) est déterminée à l'aide d'un actionnement de clignotant correspondant et/ou à l'aide d'un mouvement de volant correspondant du véhicule automobile (10).

3. Procédé selon la revendication 1 ou 2,
**caractérisé en ce que**
l'imminence du changement de voie de l'autre véhicule (18) est déterminée à l'aide d'un actionnement de clignotant correspondant et/ou à l'aide d'un mouvement correspondant de l'autre véhicule (18) dans la direction transversale (30) de la chaussée directionnelle (22).

4. Procédé selon l'une quelconque des revendications précédentes,
**caractérisé en ce que**
le signal d'avertissement est déjà émis, dès que l'imminence du changement de voie respectif du véhicule automobile (10) et de l'autre véhicule (18) a été détectée.

5. Procédé selon l'une quelconque des revendications précédentes,
**caractérisé en ce que**
aussi longtemps que l'autre véhicule (18) se trouve dans la première zone de surveillance (18), le déplacement du véhicule (18) est détecté et l'imminence du changement de voie du véhicule (18) est déterminée à l'aide de cela.

6. Procédé selon l'une quelconque des revendications précédentes,
**caractérisé en ce que**
aussi longtemps que le véhicule (18) se trouve dans la première zone de surveillance (28), le déplacement relatif du véhicule (18) par rapport au véhicule automobile (10) est détecté et, à l'aide de cela, il est déterminé s'il y a un risque de collision du véhicule automobile (10) avec l'autre véhicule (18) lors de la réalisation du changement de voie avec le véhicule automobile (10).

7. Procédé selon l'une quelconque des revendications précédentes,
**caractérisé en ce que**
une réalisation du changement de voie imminent est rendue difficile ou empêchée dès qu'un risque de collision avec l'autre véhicule (18) a été déterminé.

8. Procédé selon l'une quelconque des revendications précédentes,
**caractérisé en ce que**
une deuxième zone de surveillance (36) comprenant par endroits la première voie de circulation (20) est surveillée au moyen du système de surveillance (12) et le véhicule automobile (10) est ramené dans la première voie de circulation (20) seulement si aucun autre véhicule (38) ne se trouve dans la deuxième zone de surveillance (36).

9. Procédé selon la revendication 8,
**caractérisé en ce que**
la taille de la deuxième zone de surveillance (36), en particulier dans la direction longitudinale (40) de la chaussée directionnelle (22), est adaptée en fonction de la vitesse actuelle du véhicule automobile (10) et/ou d'une vitesse maximum actuellement autorisée.

10. Procédé selon l'une quelconque des revendications précédentes,
**caractérisé en ce que**
la taille de la première zone de surveillance (28), en particulier dans la direction longitudinale (40) de la chaussée directionnelle (22), est adaptée en fonction de la vitesse actuelle du véhicule automobile (10).

11. Véhicule automobile (10) avec :
- un système de surveillance (12), lequel est conçu
- pour détecter un changement de voie imminent du véhicule automobile (10) d'une première voie de circulation (20) à une deuxième voie de circulation (26) adjacente ;
- pour détecter un changement de voie imminent d'un autre véhicule (18) d'une troisième voie de circulation (24) s'étendant de manière adjacente à la deuxième voie de circulation (26) à la deuxième voie de circulation (26) ;
- pour surveiller une première zone de surveillance (28) comprenant par endroits la deuxième et la troisième voie de circulation (24) ;
- pour déterminer s'il y a un risque de collision avec l'autre véhicule (18) lors d'une réalisation du changement de voie avec le véhicule automobile (10) ;
- un dispositif d'avertissement (14), lequel est conçu pour émettre un signal d'avertissement, dès qu'un risque de collision avec l'autre véhicule (18) a été déterminé
- un système d'assistance au conducteur (16), lequel est conçu pour influencer la direction transversale du véhicule automobile (10), dès qu'un risque de collision avec l'autre véhicule (18) a été déterminé ;
**caractérisé en ce que**
- le système d'assistance au conducteur (16) est conçu pour ramener automatiquement le véhicule automobile (10) dans la première voie de circulation (20), dès qu'un risque de collision avec l'autre véhicule (18) a été déterminé et que la première voie de circulation (20) avec le véhicule automobile (10) a déjà été quittée au moins en partie ;
- le système de surveillance (12) est conçu pour adapter la taille de la première zone de surveillance (28), en particulier dans la direction longitudinale (40) de la chaussée directionnelle (22), en fonction d'une vitesse maximum actuellement autorisée.
